Europäisches Patentamt

European Patent Office

Office européen des brevets

(19)

(11) Publication number: **0 157 477**
**A1**

## EUROPEAN PATENT APPLICATION

(21) Application number: **85300926.4**

(22) Date of filing: **12.02.85**

(51) Int. Cl.⁴: **G 06 F 15/74,** G 06 F 3/02,
G 06 F 3/033

(30) Priority: **14.02.84 GB 8403839**

(43) Date of publication of application: **09.10.85**
**Bulletin 85/41**

(84) Designated Contracting States: **AT BE CH DE FR GB IT**
**LI LU NL SE**

(71) Applicant: **OILFIELD INSPECTION SERVICES LIMITED,**
**Silverburn Place Bridge of Don, Aberdeen AB2 8EG**
**Scotland (GB)**

(72) Inventor: **Cull, Allan James, Moredun Lodge, Peterculter**
**Aberdeen Scotland (GB)**
Inventor: **Dutton, Paul, 32 Ellon Road, Bridge of Don**
**Aberdeen Scotland (GB)**

(74) Representative: **Woodin, Anthony John et al, Fitzpatricks**
**Kern House 61/62 Lincoln's Inn Fields, London**
**WC2B 6EX (GB)**

(54) **Data collection and storage apparatus.**

(57) There is described data collection and storage apparatus comprising a collector unit portable to various locations at which measurements are to be taken and which incorporates means for identifying the locations at which measurements are made and for recording the measurements made at those locations by probes associated with the apparatus. The information collected and stored in the collector unit may be accessed by a transmitter unit in which the information is stored, or transmitted to a processor.

The apparatus may be used to monitor any desired characteristic but description is made particularly of monitoring characteristics such as thickness of members in a generally hostile environment (e.g. under-sea).

TITLE:    DATA COLLECTION AND STORAGE APPARATUS

The invention concerns data collection and storage apparatus, in particular apparatus enabling data to be collected and stored for later retrieval for processing.

The collection of data concerning processes and/or structures gives rise to a number of difficulties. If such data is to be monitored continuously (for example the monitoring of the liquid flow rate along a pipe line or of the boundaries of a secure area) it has been proposed that a number of probes or monitors be located at selected positions and that their outputs be fed by permanently wired connections to a remote monitoring or data processing location.

Such arrangements are expensive and difficult to implement, particularly if the monitored process or structure is in a hostile environment (e.g. beneath the sea).

Such arrangements are often not commercially worthwhile if the data to be monitored is required only at infrequent intervals (e.g. weeks or months).

If data is to be monitored infrequently it is possible for probes measuring selected characteristics (e.g. temperature, pressure, vibration, degree of corrosion, thickness etc.) of a process or structure to be positioned permanently on site and for the data outputs of those probes to be recorded as and when required. Alternatively it is possible for probes to be carried to the site at those times readings of their outputs are required. Clearly this latter solution significantly reduces the equipment cost of monitoring a selected location on a site.

When using either of these two arrangements, the recordal of data provided by the probes can be difficult. There may be a large number of readings to be taken and the site may be, as noted above, in a hostile environment; in either case the traditional method of recording the outputs of the probes - physically writing them down - is both time consuming and difficult. Recording data in this way also lead to errors in incorrectly noting the value indicated by a probe or later incorrectly transcribing that value onto permanent record, into a store or into data processing apparatus.

Again, plant monitoring probes generate large quantity of data which may be analysed efficiently only when those probes are connected to a computer processing system. However, when a large number of measurements are to be made at relatively infrequent intervals at points spaced apart throughout an installation, a portable instrument is often used which does not present recorded data in a form readily transferrable to a computer system. The data is usually recorded on paper to be compiled and entered into a computer manually on completion of a plant survey, with the opportunity for transcription errors noted above.

An object of the present invention is to provide apparatus alleviating or overcoming the disadvantages of the arrangements noted above and to provide a modular system comprising a portable instrument capable of storing a large quantity of inspection data and of transferring that data into a computer system for analysis when required.

In accordance with the invention there is provided data collection and storage apparatus which comprising means for receiving data, means for identifying and storing that data and means enabling data stored in the apparatus to be read therefrom for further processing.

With advantage the apparatus includes a collector unit having a number of input ports to which data in the form of electrical signals may be fed from probes, local short term data storage for storing data read into the unit, means for generating a signal identifying the data in the local store and means for feeding both the generated identifying signal and the stored data to a main memory for storage within the unit.

Preferably data fed to the unit is in the form of digital electrical signals, but if probes are used which do not provide outputs in such a form we provide that the apparatus include means for converting the output of such a probe into a digital electric signal before (or as) the data is fed to the collector unit.

The local and main memories within the apparatus may be Random Access Memories or any other suitable means for storing data in the form of digital electrical signals.

In addition the apparatus may include a transmitter unit connectable to the collector unit, and operable to access the main memory to read data stored therein. The transmitter unit may record such data in (or on) any suitable store for recording digital electric signals included therein. Alternatively the transmitter unit may be operable to transmit such data to a data processing apparatus. To effect this the transmission unit may include a Modem enabling data read from said main memory of the collector unit to be passed to a data processing apparatus via a telephone or other data transmission link. Advantageously the the transmitter unit includes a printer by means of which a permanent record of data read from said main memory can be generated.

Apparatus embodying the invention may include displays associated with the local short term memory ( for displaying the digital signal presently being fed to a selected input port) and with the signal generating means (to enable display of the identification of the data held in the local storage means).

The data collection unit may include a timer (associated with logic control circuitry therein) and a time display may be provided by the unit.

With advantage the transmitter unit may also be provided with a visual display.

All of the above noted displays may be provided as Light Emmitting Diode (L.E.D.) or Liquid Crystal (L.C.) displays.

Apparatus embodying the invention will now be described with reference to the accompanying drawing which shows diagrammatically, a collector unit and a transmitter unit together forming the apparatus.

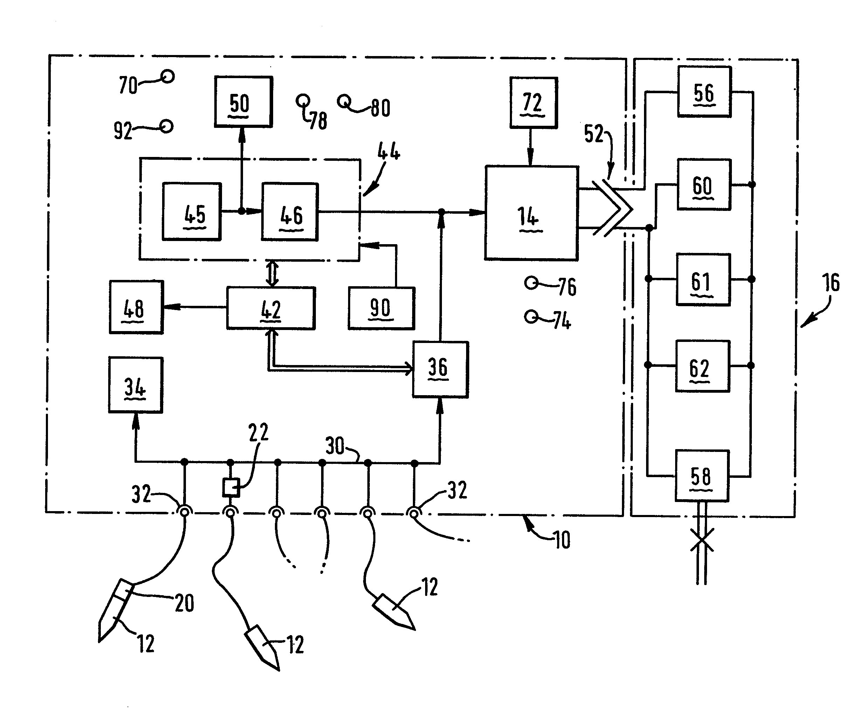

The general system shown in Figure 1 includes a collector unit 10 to which data may be fed from one or more probes only some of which are shown, 12. Unit 10 includes a main memory (R.A.M) 14 in which data collected by the probes 12 may be stored. The system further comprises a transmitter unit 16 connectable to unit 10 to enable data stored in memory 14 to be accessed and for example transmitted to a data processor ( either directly or via a telephone link).

It will be seen that unit 10 includes a data bus 30 connected to input ports 32 to which probes 12 are in turn connectable (or connected). The probes 12 provide outputs in the form of digital electrical signals or alternatively if the probes do not generate output signals in this form analog-to-digital converter means are provided associated either with the probes 12 themselves (that is to say externally of the casing of unit 10 as shown at 20) or with one or more of the ports 32 (that is to say internally of the united 10 as shown at 22).

A display 34 is provided enabling display of a digitised input signal fed to a selected port 32.

Data on the bus 32 is fed to a scratch pad or local short term memorny 36. The memory 36 stores data fed to the apparatus until it is read into main memory 14 under the control of timing and logic circuitry 42. Another digital electrical signal is fed to main memory 14 which signal identifies data being read into the apparatus (that is to say which encodes that data by identifying which probe is being currently accessed and the location at which this measurement is being taken). This signal is generated by user controller 44 which may include an alpha-numeric key pad, a bar code reader or any other means 45 by which an operator of the unit can identify the locatio n of a measured parameter and/or the port (and thus the probe) generating the data being read. We prefer that the signal generated by controller 44 is held in a local short term memory 46 until such time as it, and the data in the memory 36, is fed to main memory 14.

Both the timing and logic circuitry 42 and the controller 44 may have displays (48 and 50 respectively) associated with them.

It will be seen that with the arrangement so far described, the probes 12 may be located permanently on site, or be permanently associated with unit 10.

It will further be seen that the main memory 14 may be any suitable means for storing data in the form of digital electrical signals.

Finally it will be noted that unit 10 incorporates a power supply (not shown) for the various elements included in it.

Once unit 10 has been used to collect data, for example concerning a structure, the recorded data in main memory 14 may be accessed by the transmitter unit 16. This unit includes means 52 for coupling it to the control unit 10 when required and in particular enabling the data in the main memory 14 to be read.

To achieve this the transmitter unit 16 includes timing and control logic circuitry 56 for controlling the rate of data transfer out of main memory 14 and the rate at which it is passed to a data processing apparatus via, as shown in the drawing, a Modem 58 and telephone link or other data transmission link ( e.g. RS232). The transmitter unit 16 may with advantage include a data recorder 60 (e.g. R.A.M., a magnetic tape or a disc memory) to enable unit 16 to receive and store data for onward transmission to a data processor at a later time. Additionally the provision of this storage means within the unit 16 enables the storage of data sent thereto from the remote data processing equipment.

With advantage the transmitter unit 16 also includes a printer 61 and a display 62. This display is in the form of Light Emitting Diode (L.E.D.) or Liquid Crystal (L.C.) display.

When using this system a user need merely take the unit 10 to a structure to be monitored, either couple the unit to a probe 12 permanently sited at a selected location on the structure or, preferably, locate a probe permanently coupled to the unit 10 at the selected location on the structure, activate the unit and enter a signal identifying the location via key pad or bar code reader 45. The unit will then record the output of the probe and the signal identifying the location memory 14. The user then moves to the next location and repeats the above noted operation. The unit 10 may with advantage include means prompting the user to the next location e.g. by flashing the code number of that location on the display 50.

After a user has moved around the structure and taken readings at all of the selected locations he may then couple unit 10 to the transmitter unit 16 for the collected data to be read from memory 14 and passed directly (via the Modem and a telephone line) to a data processing apparatus and/or downloaded into the storage means provided in unit 16.

Operation of the data collector unit by a user is generally as follows.

The user first switches on the unit. An indicator light, 70, is illuminated to show that the unit is on. All data in the memory 14 is then erased (by operation of a toggle switch 72).

The user then enters a five digit job number which is displayed by the location display 50. For security this number requires to be entered twice.

The user then takes the collector unit to a location at which the measurement is to be taken. The location has associated with it the unique five digit number (for example painted on to the member to be measured) which identifies the specific point at which the measurement is to be taken. Entry of the five digit number may be by use of the alpha numeric keypad or, if a bar code is provided at the location, by use of a bar code reader. As soon as the location number has been entered (and displayed) it is possible to take the measurement required. The probe is then positioned at the location and the measurement taken by pressing an enabling button 74 on the casing of the unit. At this instant the measured value is displayed by display 34 and read into the scratch pad memory 36. The display will hold this reading for a short space of time.

At this point in time the user has a number of options. If he believes that the reading taken is generally correct he can proceed to change the location number (either by incrementing or decrementing it, or by entering a new location number via the keypad or bar code reader) or he can download the data from the unit. If the user feels that the measurement taken is incorrect he can clear the reading by depression of a clear button 76 on the casing of the unit.

Incrementation and decrementation of the location numbers is effected by pressing increment or decrement buttons 78 and 80 on the casing of the apparatus  and such an arrangement has significant practical advantage in allowing the ready alteration of the location number - for example by a user moving sequentially around a structure being monitored.

Although discussed above use is made of the keypad  for entry with both job numbers and locations it will be appreciated that the bar code reader may be used if a bar code is provided at the locations to be monitored.

In order to transfer data stored in memory 14 to the transmitter unit the collector unit is powered up and coupled at 52 to the collector unit 16. Advantageously the coupling 52 automatically sets the collector unit to a "send" mode enabling information to be read therefrom.

At this point the collector unit is, preferably, under the control of the receiver units coupled to it via the transmitter unit.

To ensure proper operation data abstracted from the collector unit is accepted only if it is in correct format. Data apparently corrupted by transmission is resent by the transmitter unit (under the effective control of the timing and control circuitry 56) Measurement location codes which may have been incorrectly keyed into the collector unit are not accepted by the computer system data base and are rejected. All the measurements outside pre-set limits are not added to the data base and the location codes are transmitted back to the transmitter unit with an instruction to repeat the measurement in respect of those locations. If the repeat measurement is similar to the original then that value is added to the data base but if it lies within the limits of the expected value then the second measurement is added to the data base.

The system provides that the processor receiving the information transmits a message to the transmitter unit as soon as all the data has been verified and sorted to inform the user of the collector unit that the transmission process has been successfully completed and that the communication link can be broken.

The processing unit then prepares, on the basis of its programming, an analysis of the measurements taken.

As noted above the probes which may be linked to the apparatus may monitor any desired characteristic, for example the temperature of the structure, the pressure to which the structure is subjected, the degree of vibration of the structure, the degree of corrosion of the structure and the thickness of a member forming part of the structure. In addition other characteristics may of course be monitored.

The timing and control circuitry incorporated in unit 10 is effectively a combination of software and hardware, in an implementation known as a "R.O.M. controller". In the particular application described four E.P.R.O.M.'s have been used instead of R.O.M.'s which has the advantage of allowing the operation of the collector unit to be varied, within reason, without need to alter the hardware.

To enable the system to execute a command (that is to say respond to an input) it must be able to proceed through a set sequence of events. This is accomplished by controlled feedback of outputs of the E.P.R.O.M.'s to their inputs, to form a "next state address" operational mode and the circuitry is gated with a clock signal so that the rate of execution is controlled.

The outputs or control signals are dependent upon both the current state of the unit and the status of the inputs to the unit.

The E.P.R.O.M.'s are preprogrammed with data relevant to the dedicated use of the collector unit and are not user reprogrammable.

The timing signal used in the "R.O.M. controller" is generated by a 10 KHz crystal controlled oscillator 90 providing a square wave with an equal mark-space ratio. This timing signal controls the rate of operation of the "R.O.M. controller"; both phases of the timing signal are used, one controlling latches that contain the next state address and the other controlling the enable signal lines de-multiplexing the input signals.

When the unique identification of the location being monitored is entered via a key pad (providing the timing and control circuitry is waiting for an input) the B.C.D. code of the number keyed in is entered in a location counter. The location counter can be incremented and decremented as appropriate. The output from the location counter is passed to a buffer in which it is held until the information is ready for transmission from the probe.

In the alternative, if the location identifier signal is generated making use of a bar code reader the output of the bar code reader is fed into the scratch pad memory and held there until the data from the probe is also read in.

Once the requisite identifying signal has been entered (via the key pad or the bar code reader), and data from the probe has been entered into the unit 10, the control circuitry causes both the identifying signal and the data to be read into the R.A.M. memory 14.

The memory 14 incorporates counters which are cascaded to provide necessary address lines for the memory chips. The memory circuitry includes fault circuitry testing whether or not the data fed to memory 14 is correctly read thereinto. To effect this the control provided by the timing and control circuitry causes each character to be read from memory immediately after it has been read thereinto. In this way the data just written into memory is still on the input bus and a comparison is possible. If one of the bits on either of the buses is different from the corresponding bit on the other bus an error signal is generated to provide a fault indication by lamp 92, on the front casing of the collector unit.

The means 52 operable to couple the collector unit to the transmitter unit incorporates A.S.C. II conversion circuitry enabling the information stored in the memory (generally in four bit form) to be coupled straight to a computer processor (generally using seven bit form).

The reason for storing data in memory in four bit form is that the three most significant bits generally require changing only for carriage return and there is no point in storing these bits as the change can be accomplished, effectively, within the collector unit using simple gating circuitry.

The memory is organised in three blocks of 16 K x 4 C.M.O.S. static R.A.M.

The memory 14 further includes address latches. When data is entered into the memory the memory address counters are incremented after storage of each character and the address is loaded into the latches. An auxiliary power supply is provided for the latches and when the collector unit itself is switched off the memory address is held in the latches. On switching on the collector unit data is loaded from the latches into the memory counters and thus the next memory address to be accessed will be the first empty memory location.

When the collector unit is put into a send mode (that is to say coupled to the transmitter 16) the memory address counters are cleared to zero but the latches still hold a count of the first free memory location. As data is accessed the counters are incremented one-by-one but the latches are left unaltered and the process is repeated until the "latch" address equals the current memory address. At this time data transmission is complete.

The practical implementation of the system now proposed has been used to measure the thickness of members in an under-sea oil rig and it has provided a useful indication of the degree of corrosion of the members of that rig.

It will be appreciated that the present invention provides apparatus applicable to the monitoring of under-sea structures which have hitherto been difficult to monitor and provides an arrangement in which a diver need merely take with him the collector unit to selected locations on the under-sea structure and at those locations monitor, making use of the probes provided in the apparatus, various characteristics of the structure under investigation.

- 14 -

0157477

CLAIMS

1. Data collection and storage apparatus comprising means for receiving data, means for identifying and storing that data and means for enabling data stored in the apparatus to be read therefrom for further processing.

2. Apparatus as claimed in claim 1, comprising a collector unit having a number of inputs to which data in the form of electrical signals may be fed from probes, local short term data storage for storing data read into the unit, means generating a signal identifying the data in the local store and means for feeding both the generated identifying signal and the stored data to a main memory for storage within the unit.

3. Apparatus as claimed in claim 2, further including analog-to-digital converters for converting the output signals of analog probes to a form acceptable for digital storage within the unit.

4. Apparatus as claimed in claim 2 or 3, wherein the local short term and main memories in the collector unit are random access memories.

5. Apparatus as claimed in any one of claims 2, 3 and 4, further including a transmitter unit connectable to the collector unit, the transmitter unit being operable to access the main memory to read both the data stored therein monitored by the probes and the identifying signals generated within the unit.

6. Apparatus as claimed in claim 5, wherein the transmitter unit records data accessed from the main memory in a digital electrical signal store.

7. Apparatus as claimed in claim 5 or claim 6, wherein the transmitter unit is operable to transmit data accessed from the main memory of the collector unit to a data processing apparatus.

8. Apparatus as claimed in claim 7, wherein the transmitter unit incorporates a Modem enabling data read from said main memory of the collector unit to be passed to a data processing apparatus via a telephone or other data transmission link.

9. Apparatus as claimed in any one of claims 5 to 8, wherein the transmitter unit incorporates a printer by means of which a permanent record of data read from said main memory of the collector unit can be generated.

10. Apparatus as claimed in any one of claims 2 to 9 further incorporating displays for displaying data read by the probes, and an indication of the location at which the probe is monitoring.

European Patent
Office

0157477

**EUROPEAN SEARCH REPORT**

Application number

EP 85 30 0926

## DOCUMENTS CONSIDERED TO BE RELEVANT

| Category | Citation of document with indication, where appropriate, of relevant passages | Relevant to claim | CLASSIFICATION OF THE APPLICATION (Int. Cl.4) |
|---|---|---|---|
| X | ADVANCES IN INSTRUMENTATION, vol. 38, part 1, Proceedings of the ISA International Conference and Exhibit, 10th-13th October. 1983, pages 63-66, Houston, US; G.MULLER: "Petrochemical plant operation improvements through the use of portable data terminals (PDT)" * The whole text * | 1 | G 06 F 15/74 G 06 F 3/02 G 06 F 3/033 |
| Y | IDEM. | 2-10 | |
| X | US-A-3 942 157 (AZURE) * Column 2, lines 46-61; column 3, line 27 - column 4, line 12; column 4, lines 41-50; column 24, lines 15-19; column 24, lines 43-51 * | 1 | |
| Y | | 2-10 | **TECHNICAL FIELDS SEARCHED (Int. Cl.4)** G 06 F 15/74 |
| A | GB-A-1 354 935 (SHIGETA) * Page 2, line 128 - page 3, line 14; page 7, line 125 - page 8, line 27 * | 1,2,5, 7,8,10 | |
| | --- -/- | | |

The present search report has been drawn up for all claims

| Place of search THE HAGUE | Date of completion of the search 24-05-1985 | Examiner LECOMTE J.M. |
|---|---|---|

European Patent
Office

**EUROPEAN SEARCH REPORT**

0157477

Application number

EP 85 30 0926

Page 2

## DOCUMENTS CONSIDERED TO BE RELEVANT

| Category | Citation of document with indication, where appropriate, of relevant passages | Relevant to claim | CLASSIFICATION OF THE APPLICATION (Int. Cl.4) |
|---|---|---|---|
| X | FR-A-2 162 650 (MONARCH MARKING SYSTEMS) <br> * Page 2, lines 22-37; page 6, line 31 - page 7, line 6; page 7, lines 22-26 * | 1 | |
| A | | 4,5,7, 8,10 | |
| | ----- | | |
| | | | **TECHNICAL FIELDS SEARCHED (Int. Cl.4)** |

The present search report has been drawn up for all claims

| Place of search | Date of completion of the search | Examiner |
|---|---|---|
| THE HAGUE | 24-05-1985 | LECOMTE J.M. |